# EUROPEAN PATENT SPECIFICATION

(11) **EP 2 996 029 B1**
(45) Date of publication and mention of the grant of the patent: **18.11.2020**
(21) Application number: 15184545.0
(22) Date of filing: 09.09.2015
(51) Int. Cl.: G06F 3/12

(54) **METHOD FOR GENERATING A PROOF OF A PRINT JOB COMPRISING A DOCUMENT TO BE PRINTED WITH PARAMETERS AND SYSTEM THEREWITH**
VERFAHREN ZUR ERZEUGUNG EINES NACHWEISES EINES DRUCKAUFTRAGS MIT EINEM ZU DRUCKENDEN DOKUMENT MIT PARAMETERN UND SYSTEM DAMIT
PROCÉDÉ PERMETTANT DE GÉNÉRER UNE PREUVE D'UNE TÂCHE D'IMPRESSION COMPRENANT UN DOCUMENT À IMPRIMER AVEC DES PARAMÈTRES ET SYSTÈME ASSOCIÉ

(30) Priority: 10.09.2014 EP 14184218
(43) Date of publication of application: 16.03.2016
(73) Proprietor: Canon Production Printing Netherlands B.V., 5914 HH Venlo (NL)
(72) Inventor: VAN DUN, Josephus A.M., 5914 CA Venlo (NL)
(74) Representative: Canon Production Printing IP Department

(56) References cited:
- US-A1- 2007 268 513
- US-A1- 2009 021 757
- US-A1- 2009 027 706
- US-A1- 2010 177 330
- US-A1- 2011 176 151

## Description

### TECHNICAL FIELD

The presently disclosed invention relates to a system and a method for the automatic generation of a proof job comprising samples taken out of a print job and/or allowing print operators to produce, to display and/or to print the produced proof job so that it can be manually inspected with the aim to identify potential printing issues when printed on a target printer. The aspects hereinafter presented are related to printing devices, preflight and proofing systems and methods and the like.

### BACKGROUND OF THE INVENTION

Preflight and proofing are techniques allowing print operators to check the quality of print jobs before actually printing them, before going to production or to verify the stability of the printing process during the production. The problem with these techniques is that they are based on a complex process that is hard and/or costly to perform with regard to several aspects and hence the interest in optimizing it.

US patent application US 2007/268513 A1 discloses a method for document print production conflict visualization and resolution. A document and a job ticket is selected for printing, with the job ticket including various document publishing requirements. Conflict analysis is performed to identify at least one conflict among the document publishing requirements and a visualization of each identified conflict is sequentially presented on a user interface. The visualizations utilize graphical clues, superimposed upon the rendering of a 3D model of the document, to clearly illustrate the nature of each problem, and sequentially show how each available suggested solution would resolve the conflict. The user interface requests approval to proceed with problem resolution if a conflict is identified among the publishing requirements or indicates that no conflict is present.

US patent application US 2009/021757 A1 discloses checking print job attributes to identify potential conflicts and potential invalid settings. A job setting manager process executing on a printing device is configured to examine and store print job attributes as detected by print interpreter modules. The job setting manager maintains a data structure comprising print job attributes, their values, and other information. As each interpreter module detects a job setting in the print data, the job setting manager receives this setting and its value and checks the data structure to identify conflicts between previously-set job attributes and whether the requested job attribute is supported by the destination printing device. If a conflict is identified, a notification is produced.

US patent application US 2010/177330 A1 discloses a print defect management device that supports job-specific print defect management. It automatically assesses print job pages to determine the severity of image quality defects likely to occur on one or more selected printers.

US patent application US 2011/176151 A1 discloses a system and method for configuring a customized sample job for monitoring print quality and increasing proofing flexibility. The custom sample job can be selected with respect to a primary rendering job in order to render a sample page based on a predefined frequency interval (e.g., after every N sheets) to a sample tray. US patent application 2009/027706 A1 discloses preflight and proofing to check the quality of print operations before going to production.

Some first attempted solutions focus on the reduction of the proofing time and costs by reducing the size of the proof job. The assumption made is that a smaller proof job is cheaper to print and can be examined faster and easier by print operators when compared to the print job. The main drawback related to these solutions is that the proofing accuracy and confidence level in the proofing results are not optimal since, due to its reduced size and simplified constitution, the proof job cannot encompass all possible printing issues that could be observed when printing the print job.

Some further attempted solutions focus on improving the accuracy and confidence level in the proofing results by sampling the print job document and building a proof job out of the selected samples. The assumption made is that if the selected samples are printed with certain quality than the print job will be printed at production time with a similar quality. The difficulty is in the contradiction between the two proofing goals requiring on the one hand a small proof job that can be printed fast and cost effective and requiring on the other hand a large proof job that is representative in the sense that it exhibits with a high confidence level the same potential printing issues as the print job.

Other further attempted solutions focus on providing a method for the automatic generation of a proof job out of a print job. Such methods involve the steps of sampling the print job document, characterizing the samples with regard to their properties, clustering together similar samples into groups, selecting from these groups a subset of samples that are considered as the most representative for proofing with regard to a proofing goal embedded in an algorithm and, finally, assembling the selected samples in a proof job.

The object of the present invention is to remove or at least mitigate the above problem of the prior art.

### BRIEF SUMMARY

This object is achieved by a method for automatic generation of a proof job from a print job to be printed on a printer, the print job comprising one or more documents and zero or more job parameters, wherein the documents comprise one or more graphical elements, and wherein the printer has a printer configuration, the printer configuration comprising a printer setting and a printer state, the method comprising the steps of: determining for a graphical element from the one or more documents that printing the graphical element will likely involve a print quality issue while taking into account the printer setting and/or the printer state, and, when present, the zero or more job parameters, selecting graphical elements in the vicinity of the determined graphical element, composing a proof job comprising proofing graphical elements, and proof job parameters taken from the print job parameters or the printer settings, wherein the proofing graphical elements comprise at least part of the selected graphical elements, and/or a derived graphical element having an attribute that is equal to an attribute of the determined graphical element, wherein the attribute contributes to the occurrence of the print quality issue.

Disclosed hereinafter are a system and a method for the automatic generation of a proof job comprising annotated samples taken out of a print job and/or new derivate graphical elements with the purpose of allowing print operators to produce, display and/or print the produced proof job so that it can be further examined with the aim to identify potential printing quality issues that are specific to the print job when printed on a target printer configured with a specific configuration. It is anticipated that by using the present invention proofing will benefit at least of an improved accuracy and confidence level in the proofing results while preserving a cost efficiency balance. It is also anticipated that a system embodying such a method will allow non-experts to proof print jobs using a simplified and cost effective process.

The prior art exhibits a complementary problem, namely that the interpretation of the proofing results requires expertise without which corrective actions cannot be executed efficiently. This requirement translates to higher operation costs since higher qualified working force or more proofing-tuning cycles are expected. Hence, the interest in eliminating the need for experienced print operators and enabling non-experts to efficiently perform the proofing and quality tuning.

Furthermore, with regard to the prior art, the above mentioned US 2007/268513 A1 shares a number of features with the present invention by disclosing: a method for automatic generation of a 3D visualisation of a print job to be printed on a printer, the print job comprising a document and job parameters, wherein the documents comprise one or more graphical elements, the method comprising the steps of: determining for a graphical element from the one or more documents that printing the graphical element will likely involve an issue, selecting graphical elements in the vicinity of the determined graphical element, composing a 3D visualisation comprising graphical elements, wherein the visualised graphical elements comprise at least part of the selected graphical elements, and/or a derived graphical element having an attribute that is equal to an attribute of the determined graphical element, wherein the attribute contributes to the occurrence of the print quality issue.

According to one aspect of the proposed method of the present invention, graphical elements taken from the print job are automatically analyzed and characterized considering their enlarged context which comprises at least the configuration of the target printer including its settings and state and preferably part of the surrounding graphical elements and the print properties of the print job. As a result of the characterization step, metadata comprising characterization parameters is produced and associated with the analyzed graphical elements. As a person skilled in the art of proofing will notice, the fact that graphical elements are analyzed with regard to their enlarged context allows to pinpoint potential quality issues that otherwise could not be identified by traditional characterization methods where the graphical elements are analyzed and characterized in isolation with regard to their own properties and/or without considering the influence of all the factors having an impact on the final printing quality from the complete end-to-end print chain. Hence, graphical artifacts that are difficult to print correctly in combination, that are difficult to print due to the chosen print parameters and/or due to the specifics of the target printer configuration can now be identified by the proposed method and therefore they are available for selection and inclusion in the proof job. An example of graphical elements difficult to print in combination are touching (but not overlapping) graphical elements with different colors, or overlapping graphical elements with a transparency property.

According to a second aspect of the proposed method, a selection step is used to identify a list of optimal proofing samples that are clusters of graphical elements taken from the print job. In this step the graphical elements are analyzed, clustered and selected with regard to a set of selection criteria considering their characterization metadata and, as for the analysis step, by also considering their extended context. With regard to a preferred aspect, the selection step involves two selection rounds allowing for the first to identify an intermediate list of potential proofing sample candidates that are ranked and then, for the second round, to select the highest ranked ones based on the selection criteria. A further important aspect is that the produced samples are bidirectional linked to the graphical elements they refer to. The consequent advantages are that all following processing steps are capable to know the composition and the location of the samples within the print job and, also to find out which of the graphical elements are included in the samples for proofing and which are not. Hence, the tractability and the coverage of the proofing are well known and can be exploited further by automated processing steps or by print operators willing to assess proof jobs comprising samples.

According to another important aspect of the proposed method, a step for automatic generation of a number of derived graphical elements may be used to produce, aside of the already selected samples, additional proofing graphical elements. These derived graphical elements are visual aids built in such a way that even non-experienced print operators lacking proofing domain knowledge can interpret them fast and efficiently. Derived graphical elements categories comprise textual annotations, companion views and alternative synthetic views. As a first category, textual annotations comprise written information helping print operators to interpret and take corrective actions when examining the proof job or parts of it. Therefore, textual annotations are attached to other proofing graphical elements like the companion views, the alternative synthetic views and commonly to the samples and, in this later case, they provide hints about the location of the sample within the print job, the importance and the type of potential quality issues that may be present in the attached sample, the location of other hotspot zones that may exhibit similar quality issues and/or, a description for possible corrective actions that can be taken by the print operators to improve the print quality when the proofing results deem to be negative. As a second category, companion views are meant to help print operators assess easier and faster other proofing graphical element to which they are attached to. For example, typical examples of companion views attached to a sample include but are not limited to high contrast maps of zones having out-of-gamut colors, insufficient resolution and/or details that are hard to print. Other typical examples of companion views include zoomed details of samples that can be investigated easier by print operators. As a third category, alternative synthetic views are new proofing graphical elements exhibiting one or more potential printing quality issues using an alternative visual representation that is easier to assess when compared to the samples taken as such, for example a box colored with a spot color used in the sample. However, although the alternative synthetic views are newly generated their content is inferred from the information found in the print job and should not be confused with other statically defined visual artifacts like calibration color palettes.

According to another aspect of the proposed method, an automatic composition step is used to assemble the proof job from a set of proofing graphical elements that are either the samples produced by the automatic selection step and/or that are derived graphical elements produced by the automatic generation step. It shall be noted that the proofing print parameters are directly derived from the print parameters of the print job and/or from the printer configuration by eliminating any parameters that do not have an impact on the print quality. This constitutes an advantage as, depending on the print job composition and proofing goal, the proofing print parameters can be optimized to further reduce and simplify the produced proof job without compromising the confidence level in the expected results. For example, unless otherwise considered as impacting the stability of the printing process of large jobs the number of copies may be stripped from the proofing print parameter.

Finally, according to another aspect of the proposed system embodying the proposed method, the proofing functionality is further exposed in such a way that it becomes trivial to use, configure and trigger by non-experienced print operators and/or external systems. Such a system comprises the additional option for an easy proofing button that can be triggered by print operators in one action. It also comprises the options for enabling or disabling the automatic proofing of print jobs and for configuring the default proofing parameters. Such a system also comprises the option for specific commands and/or parameters embedded in the print job using a printer description language and that control the system behavior and options to be used for proofing the print job.

### BRIEF DESCRIPTION OF THE DRAWINGS

- Figure 1: illustrates an example of a print job document as processed by the invention.
- Figure 2: illustrates an example of proof job produced by a preferred aspect of the invention.
- Figure 3: shows flow diagrams for three alternative aspects.
- Figure 4: is a diagram illustrating the analysis and characterization step of the flow diagrams of figure 3.
- Figure 5: is a diagram illustrating the selection step of the flow diagrams of figure 3.
- Figure 6: is a diagram illustrating the generation step of the flow diagrams of figure 3.
- Figure 7: is a diagram illustrating the composition step of the flow diagrams of figure 3.
- Figure 8: depicts an example of a user interface of a preferred aspect of the invention.
- Figure 9: presents a preferred aspect of of the invention.

### DETAILED DESCRIPTION

The herein disclosed method and system are described in detail hereon further using references to the drawings that illustrate the constituent entities and workflow of the method, system or of preferred aspects as well as relationships between them. For clarity, each unique entity is referenced using a unique numeral. It shall be noted that, identical entities represented in different drawings have identical numerals as they are the same. It shall also be noted that for clarity, within a drawing entities participating to different relationships may be represented multiple times and they are considered the same as long as they are referenced using identical numerals. Finally, it shall be noted that oriented arrow lines indicate the flow of execution while non-oriented lines connecting entities represent relations.

As it will be further appreciated the method described herein after will be preferably carried out on a system such as a printer, a printer controller, or on a system capable of preparing and/or submitting and/or preflighting and/or proofing print jobs.

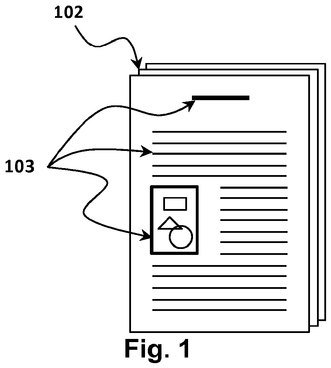

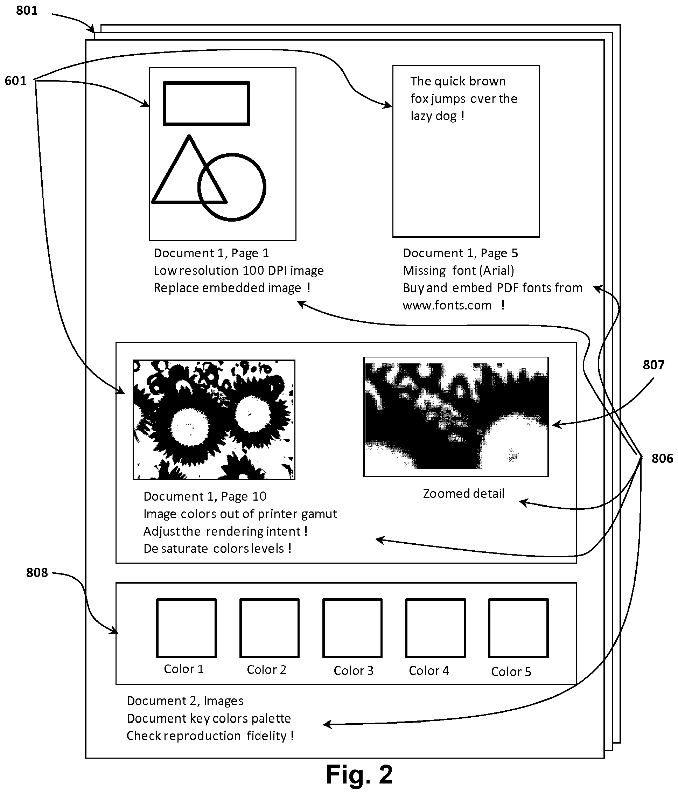

Referring to Figure 1, a document (102) in a print job is comprised of graphical elements (103) that are commands or data structures optionally nested or clustered together described and assembled together respecting a print document language format such as Adobe PDF, Hewlett-Packard HPGL, Autodesk DWG/DWF, TIFF or any other format that can be used to describe two or more dimensional visual artifacts that can be displayed and/or printed with a printer. It shall be noted that, the interpretation attributed to the term document (102) denotes the information, typically binary, describing its content and that is preferably stored on a storage device, memory or communication channel including but not limited to a computer hard disk, a computer random access memory or a communication bus that can be addressed and accessed for reading by a processing unit in order to process and/or display and/or print said document on a printer. Also, it shall be noted that the term graphical elements (103) has a variable granularity and can be used to denote any printable artifacts as small as one pixel, a vector line using a pencil or stroke or as large as a set of pixels, a cluster of vector lines, vector surfaces, clusters of other graphical elements optionally nested or any other parameterized graphical elements representing images, text or other multidimensional graphical constructions denoting a parameterized surface or shape that can be produced by a printer that is capable of interpreting said document information. Finally, it shall be noted that the terms printer or alternatively printing system are interchangeable and meant to be understood broad as a system that is capable to produce a physical representation of a document (102). Therefore, although preferred aspects relate to printing systems comprising ink jet printers, laser printers or other printing systems capable of producing two-dimensional images that are typically imprinted on a physical media it shall be understood that the scope of this term is broader and includes other printing systems that do not forcedly require a media on which to print or that do not necessarily require ink. Examples of such broad printing systems are laser engravers, three-dimensional printing systems, photo printers or other ink-less or media-less printing systems. Referring to Figure 2, an example of a preferred aspect of a printed proof job (801) is presented. The printed proof job (801) comprises a set of proofing graphical elements that are samples (601) taken from a print job document (102) such as the one presented in Figure 1 and/or that are derived graphical elements such as textual annotations (806), companion views (807) and/or alternative synthetic views (808) that are produced using the method presented hereinafter. The term sample denotes a cluster of graphical elements (103) taken from the document (102) and that are preferably found in visual vicinity when displayed or printed. The term text annotation (805) shall be interpreted as a cluster of graphical elements that contain textual information representing visual aids and assistance hints that can be read and interpreted by print operators. It shall be noted that, while nothing interdicts having standalone text annotations, within a preferred aspect these will be preferably attached and refer to other proofing graphical elements such as the samples (601), the companion views (807) and/or the alternative synthetic views (808). Therefore, in a preferred aspect text annotations (806) will guide even non-expert print operators to assess the print quality of a printed proofing graphical element to which the text annotation is attached. Additionally, the term companion views (807) denote clusters of graphical elements newly constructed from the samples (601) to which they are attached and refer to and, represent visual aids allowing non-experienced print operators to easy find the locations within said samples (601) where printing quality issues need to be assessed. Further, the term alternative synthetic views (808) denotes clusters of graphical elements newly created from the graphical elements (103) of a document (102) and that are better suited for assessing a particular quality aspect of the document (102) that cannot be otherwise easily and/or efficiently assessed using said samples (601). For clarity, typical examples of such alternative synthetic views (808) include but are not limited to color palettes of key colors, spot colors present in the document (102) or colors out of gamut.

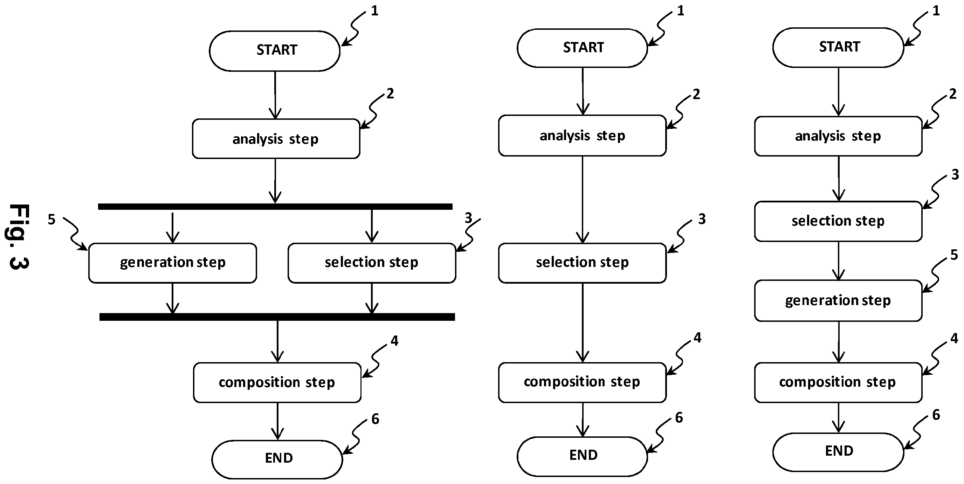

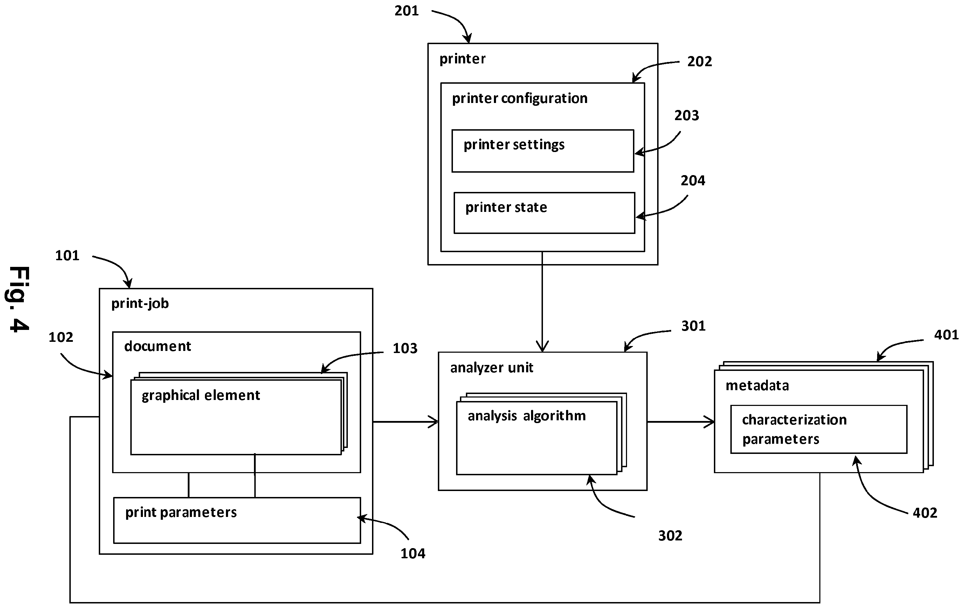

Figure 3 shows three alternative workflows to carry out the invention. The herein after described method comprises the steps of analysis (2), selection (3), composition (4) and, in a preferred aspect, the additional step of generation (5). The method can be started from an initial state (1) when a print job is available and ends in a final state (6) when an associated proof job is produced and available for display, printing or other further uses. The execution order is illustrated by the connection arrows. The selection (3) and generation (5) steps may be executed concurrently or, in a preferred aspect shown by the rightmost workflow path, sequentially when the generation step (5) takes advantage of the results produced by the selection step (3). A minimal aspect, as shown in the middle workflow path, skips the generation step (5). The role and behavior of each of these steps is further illustrated in Figures 4-7.

Referring to Figure 4, the analysis step is implemented by means of an analysis unit (301) comprising at least one analysis algorithm (302) arranged to analyze at least part of the graphical elements (103) of an input document (102) of a print job (101) and to produce as output for some of the analyzed graphical elements (103) associated metadata (401) comprising characterization parameters (402). It shall be noted that the term print job (101) denotes information, typically binary, comprising the document (102) to be printed and, optionally, print parameters (104) that are typically expressed using an electronic ticket and that may be associated globally with the document (102) or locally to graphical elements (103) representing parts of said document (102). Also, it shall also be noted that the analyzer unit (301) and inherently the algorithms (302) have access to the print parameters (104) associated to the graphical element (103) under analysis or associated to the document (102) when analyzing a graphical element (103) and also have access to other graphical elements (103) forming an enlarged context and that may infer when printed with the graphical element (103) under analysis. Finally, it shall be noted that the analyzer unit (301) and inherently the analysis algorithms (302) may preferably have access to a printer configuration (202) of a target printer (201) and may preferably consider part of these when analyzing the graphical elements (103) of said document (102). Therefore, in a preferred aspect the analysis algorithms (302) will preferably analyze the graphical elements (103) not only with regard to their attributes but also by considering the print parameters (103) and/or the printer configuration (202) of a target printer (201) and, even more preferably, by considering the enlarged context of the inferring graphical elements (103). As a result, of the analysis step, some graphical elements (103) that have been analyzed and identified as interesting for proofing are therefore characterized using metadata (401) comprising characterization parameters (402). Examples of characterization parameters are the usage of spot colors (to proof spot colors), the existence of overlap of two or more graphical elements (to proof overprint), and the existence of touching graphical elements or graphical elements that nearly touch or slightly overlap (to proof trapping). In these examples the algorithm (103) may take into account the printer configuration (202) by checking whether the printer actually has a spot color physically loaded or whether the spot color is emulated with process colors; by checking the overprint settings of the printer; and by checking the trapping settings of the printer. Furthermore, the algorithms may check whether used fonts are embedded in the print job, and if not whether they are installed in the printer. If a used font is neither embedded in the print job, nor installed in the printer, font substitution will take place and one or more samples of text in the missing font is necessary.

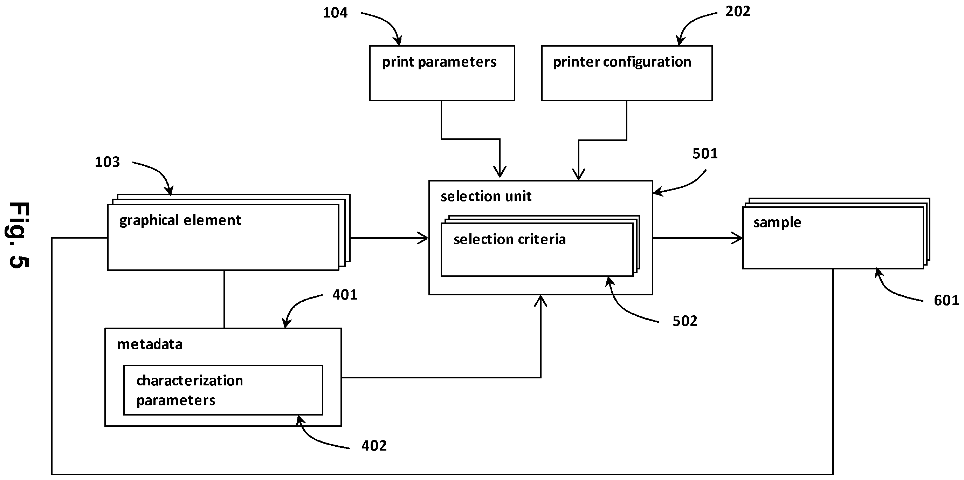

Referring to Figure 5, the selection step is implemented by means of a selection unit (501) that inspects at least part of the characterized graphical elements (103) having associated metadata (401) with characterization parameters (402) and that selects samples (601) that are clusters of graphical elements (103) typically found in the vicinity of a characterized graphical element (103) that is inspected and that is deemed to be selected as interesting for proofing by the selection unit (501). The selection unit (501) inspects preferably one-by-one and selects graphical elements (103) by applying at least one selection criteria (502) considering as input at least part of the inspected graphical element (103) and at least part of the characterization parameters (402) of the metadata (401) associated to the graphical element (103) and, preferably also considering at least part of print parameters (104) aimed to be used for printing of the graphical elements (103) and, more preferably also considering at least part of a printer configuration (202) of a target printer on which the graphical elements (103) need to be printed as part of said document from said print job. In an even more preferable aspect, when inspecting a graphical element (103) the selection criteria (502) will also consider for inspection and selection the enlarged context comprising of graphical elements (103) found in the vicinity of the inspected graphical element (103). The selection unit (501) associates the selected samples (601) to the constituent graphical elements (103) preferably by generating new associated metadata (401) having characterization parameters (402) that identify the sample. Therefore, for each sample (601) it is possible to know the constituent graphical elements (103) and, for each graphical element (103) it is possible to know if the graphical element (103) was included for proofing or not and in which samples (601).

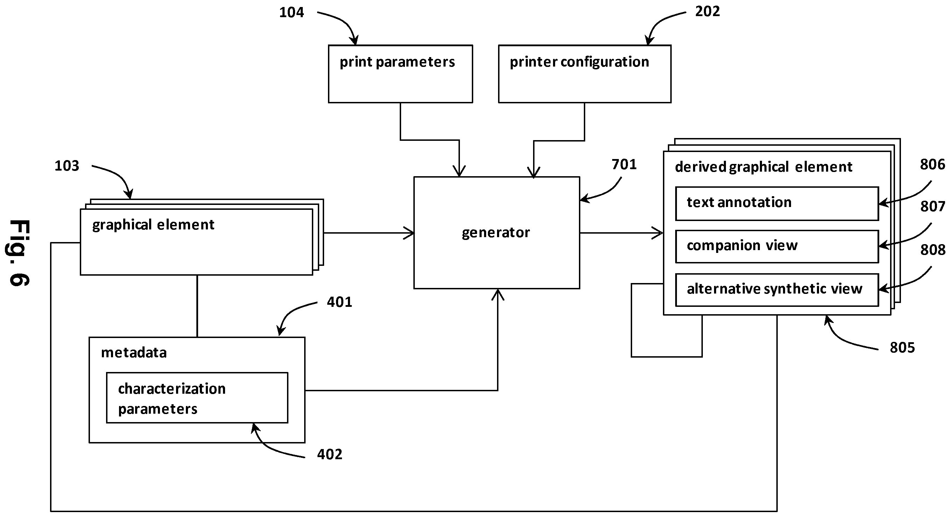

Referring to Figure 6, the generation step is implemented by means of a generator (701) that inspects graphical elements (103) having metadata (401) comprising characterization parameters (402) and produces new derived graphical elements (805) that are text annotations (806) and/or companion views (807) and/or alternative synthetic views (808). The produced derived graphical elements (805) are associated to the graphical elements (103) that have been used as source for producing them and may also be associated and refer to other referred derived graphical elements (805). When producing derived graphical elements (805) out of the graphical elements (103) the generator (701) is preferably arranged to also consider at least part of the print parameters (104) aimed to be used for printing of the graphical elements (103) and, even more preferably to consider at least part of a printer configuration (202) of a target printer on which the graphical elements (103) need to be printed as part of said document of said print job.

Examples of derived graphical elements (805) are basic shapes (for example a square box) printed in a spot color used by the graphical element (103) that needs proofing. The original graphical element (103) may be less suitable for proofing as it may be "buried" between other graphical elements (103) and may have other properties such as small dimensions that make it more difficult to properly proof the spot color.

Another example of a derived graphical element (805) is a string of characters in the font that is specified by the graphical element (103) that needs proofing. The string of characters may contain a selection of characters from the specified font that are considered representative or characterizing for the font, for example a pangram. It may aid the operator to proof the font in addition to the actual sample in the proof job. Additional examples are textual annotations explaining why the sample was selected, what kind of printing issues to look for, and/or what actions to take if the sample in the proof actually exhibits the actual print quality issue.

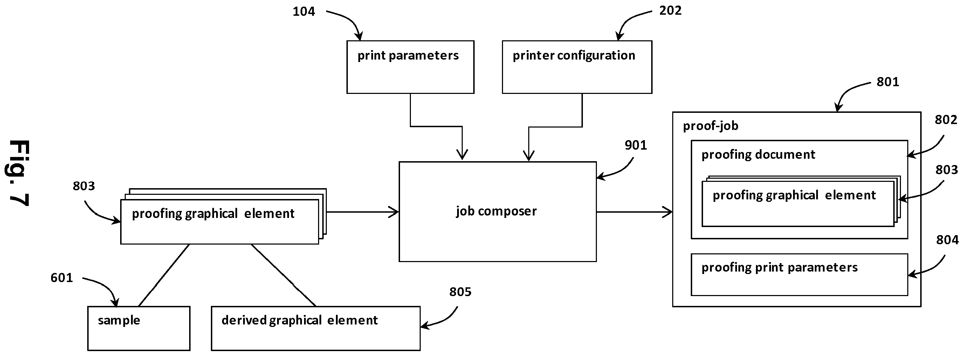

Referring to Figure 7, the composition step is implemented by means of a job composer (901) arranged to produce a proof job (801) comprising a proofing document (802) and proofing print parameters (804). The job composer (901) is arranged to assemble the produced proofing document (802) out of a set of proofing graphical elements (803) that may be rearranged and that are samples (601) produced by the selection step detailed in Figure 5 and/or that are the derived graphical elements (804) produced by the generation step shown in Figure 6. The job composer (901) is also arranged to produce the proofing print parameters (804) by considering as input at least part of the same print parameters (104) aimed to be used for printing of the print job from which the proofing graphical elements (803) have been generated by said selection and generation steps and/or by also considering as input at least part of the same printer configuration (202) of a target printer on which the print job from which the proofing graphical elements (802) have been generated is intended to be printed on.

Print parameters (104) that should preferably be included in the proofing print parameters (804), are the print parameters (104) that were taken into account by the analysis algorithm (302) for the graphical elements (103) that likely exhibit a print quality issue. For example, if the print parameters (104) comprise a color space definition, this definition should be included in the proofing print parameters (804) if any of the graphical elements (103) would likely exhibit a print quality issue in the area of color reproduction.

At the other hand, if the print parameters (104) specify a specific number of copies to print, there is generally no need to include the number of copies in the proofing print parameters (804).

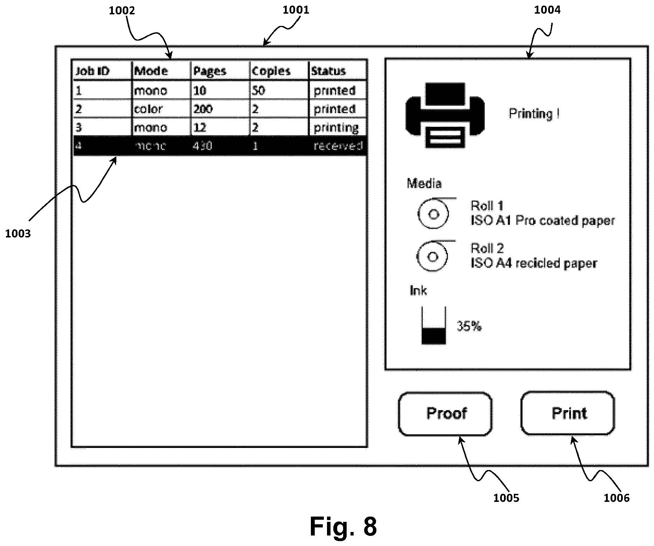

Referring to Figure 8, an example of an aspect of a user interface (1001) of the system presented herein is shown. At a minimum, the user interface (1001) provides means for showing at least part of the print properties of a currently selected print job (1003) and, means such as a proof button (1005) allowing to explicitly triggering the automatic generation of a proof job out of said print job. For clarity, in a preferred aspect of the system, and more preferably of a printer, the user interface (1001) shall also provide means for displaying the print jobs available on the system and details for important print parameters using a job details area (1002), means for showing the currently selected print job (1003) and optionally for selecting another print job, means for showing the printer status (1004), means for triggering the printing of the currently selected print job such as a print button (1006) and means for proofing the currently selected job (1003) such as a proof button (1003).

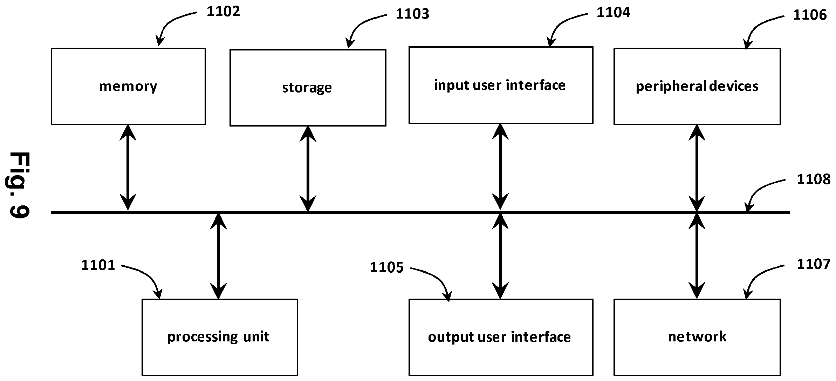

Referring to Figure 9, an example of a preferred aspect of a system that is a printer or printer controller is presented. Such a system has means for storing data such as print jobs and/or printer configuration and/or for storing programs that, when executed, access and process said data and/or read and command peripheral devices (1106). In a typical aspect said storage means are implemented using a memory (1102) such as a random access memory and/or a persistent storage (1103) such as a computer hard disk that are arranged for fast access, for data persistence or for other usage goals. Additionally, such a system has means for accessing and processing said data by executing said stored programs using a processing unit (1101) such as a central processing unit or a specialized application specific integrated circuit that is arranged to implement at least part of said method steps. Additionally, such a system has means for an input user interface (1104) such as buttons and/or touch screen that can be actioned by users such as print operators to trigger further actions on the system such as generating automatically and/or printing a proof job out of a print job. Additionally, such a system has means for an output user interface (1105) such as a display that is arranged to advertise information such as printer settings and/or printer status and/or at least part of the printing parameters of a currently selected print job or of another print job available in the system storage. Additionally, such a system has means for interacting with peripheral devices (1106) such as a memory card reader and/or printer hardware, such as a print engine, that is arranged to print and/or finish print jobs or proof jobs using specific print parameters. Additionally, such a system preferably has network (1107) means that can be used to communicate with other external systems such as print job submitter applications or other printing systems. In a preferred system aspect, the system will be arranged to receive new print jobs using the network means (1107) and to automatic process and proof said jobs based on the system configuration and print job. All the means of said system aspect are connected and capable to interact by means of a communication buss (1108) that may embody different topologies. The aspects described above and presented in the drawings are merely exemplary aspects of the invention. It should be understood that many variations, modifications, and combinations are possible and that these aspects should not be considered as limitative for the protection sought. The protection sought is solely defined by the following claims.

## Claims

1. Method for automatic generation of a proof job from a print job (101) to be printed on a printer (201), the print job (101) comprising one or more documents (102) and zero or more job parameters (104), wherein the documents (102) comprise one or more graphical elements (103), and wherein the printer (201) has a printer configuration (202), the printer configuration (202) comprising a printer setting (203) and a printer state (204), the method comprising the steps of:
- determining (2) for a graphical element (103) from the one or more documents (102) that printing the graphical element (103) will likely involve a print quality issue while taking into account the printer setting (203) and/or the printer state (204), and, when present, one or more job parameters (104) being characterization parameters (402) of metadata (401) associated with the graphical element (103) and aimed to be used for printing of the graphical element (103),
- analyzing (2) at least part of the graphical elements (103) of an input document (102) of the print job (101),
- producing as output for some of the analyzed graphical elements (103) the associated metadata (401) comprising the characterization parameters (402),
- selecting (3) based on the associated metadata (401) comprising the characterization parameters (402) graphical elements (103) from the input document (102) in the print job (101) in the vicinity of the determined graphical element (103),
- generating (5) from the selected graphical elements and associated metadata and considering the print parameters and printer configuration, derived graphical elements,
- composing (4) a proof job comprising a proofing document comprising proofing graphical elements, and proofing print parameters taken from the print job parameters (104) or the printer settings (203), and
- the printer (201) printing the composed proof job.
wherein the proofing graphical elements are from a set of the selected graphical elements (103), and/or the derived graphical elements having an attribute that is equal to an attribute of the determined graphical element (103), wherein the attribute contributes to the occurrence of the print quality issue, and
wherein the derived graphical element is visually associated to the selected graphical elements (103) to be printed as a visual aid, and
wherein determining (2) that printing the graphical element (103) will likely involve a print quality issue comprises determining that printing the graphical element (103) will likely involve a print quality issue due to the rendering or printing of the graphical element (103) interacting with at least one other selected graphical element (103).

2. The method of claim 1 wherein the determining step (2) determines the likely involvement of at least one of the following print quality issues:
• unknown or invalid print job format or content,
• unknown or invalid document format or content,
• unknown or invalid print parameters,
• a combination of mutually exclusive print parameters (104) when used on the target printer (201),
• print parameters (104) that are difficult to print on the target printer (201),
• text graphical elements using non-embedded soft fonts,
• text graphical elements using fonts unavailable on the printer (201),
• text graphical elements that are too small for the target print resolution,
• image graphical elements that are not embedded or having broken-link references,
• graphical elements close to the page bleeding area of the target printer (201),
• bleeding graphical elements,
• overprinting of graphical elements,
• graphical elements that are thin lines hard to print,
• graphical elements having low contrast over background,
• overprinting of graphical elements that having transparencies,
• missing pencils for vector graphical elements,
• vector graphical elements with details that merge when printed at the printing resolution,
• graphical elements that use color tones for gray levels,
• adjacent graphical elements with low contrast,
• rich tones that cannot be reproduced,
• hotspot colors,
• palette colors,
• graphical elements requiring different processing options that interfere with each other when printed together on same media,
• graphical elements with different resolutions,
• graphical elements with a resolution not matching the printing resolution,
• graphical elements having predefined colors considered to be intense colors,
• graphical elements using different color spaces,
• graphical elements having colors that are out-of-gamut for the printer (201),
• graphical elements having colors that are defined as difficult to reproduce when printed on said printer optionally taking into account printing parameters and/or loaded consumables, and
• the usage of similar or different halftones on a single page.

3. The method of claim 1, or 2 wherein at least one of said steps of determining (2), selecting (3) and composing (4) are arranged to limit or reduce the produced outputs so that the size of the proof job is such that the printing waste and/or the printing time are reduced when printing the proof job on said printer (201) having said printer configuration (202) and status and using said proofing print parameters.

4. A computer program product that, when executed on a processor, executes a method according to any of claims 1-3.

5. A non-transitory data carrier having stored thereon the computer program product according to claim 4.

6. Reprographic device for automatically generating a proof job from a print job (101) to be printed on a printer (201), the print job (101) comprising one or more documents (102) and zero or more job parameters (104), wherein the documents (102) comprise one or more graphical elements (103), and wherein the printer (201) has a printer configuration (202), the printer configuration (202) comprising a printer setting (203) and a printer state (204), the device comprising:
- print issue determination means for examining (2) a graphical element (103) from the one or more documents (102) and determining that printing the graphical element (103) will likely involve a print quality issue, wherein the print issue determination means take into account the printer setting (203) and/or the printer state (204), and, when present, one or more job parameters (104), being characterization parameters (402) of metadata (401) associated with the graphical element (103) and aimed to be used for printing of the graphical element (103), and for analyzing at least part of the graphical elements (103) of an input document (102) of the print job (101), and for producing as output for some of the analyzed graphical elements (103) the associated metadata (401) comprising the characterization parameters (402),graphical element selection means for selecting (3) based on the associated metadata comprising the characterization parameters (402) graphical elements (103) from the input document (102) in the print job (101) in the vicinity of the determined graphical element, generating means for generating (5) from the selected graphical elements and associated metadata and considering the print parameters and printer configuration derived graphical elements, proof job composition means for composing (4) a proof job comprising a proofing document comprising proofing graphical elements and proofing print parameters taken from the job parameters (104) and/or printer settings (203), wherein the proofing graphical elements are from a set of the selected graphical elements, and/or the derived graphical elements having an attribute that is equal to an attribute of the determined graphical element, wherein the attribute contributes to the occurrence of the print quality issue, and
wherein the derived graphical element is visually associated to the selected graphical elements (103) to be printed as a visual aid, and
wherein determining that printing the graphical element (103) will likely involve a print quality issue comprises determining that printing the graphical element (103) will likely involve a print quality issue due to the rendering or printing of the graphical element (103) interacting with at least one other selected graphical element (103).

7. The reprographic device of claim 6 that is a printer (201) or a printer controller, further comprising:
- user input means for receiving input from a user, and
- user output means for providing output to a user, and, wherein the user input means is arranged to display a proof widget to allow print operators to trigger the generation of a proof job and, wherein the user output means is arranged to show at least part of the print parameters (104) of the print job (101) that is currently selected in combination with the proof widget.

8. The reprographic device of claim 7 arranged to automatically produce and print a proof job for each print job (101) received on the printer (201) based on the printer configuration (202).

9. The reprographic device of claim 6 or 7 arranged to use one or more proofing parameters or commands embedded within the print job parameters (104) and, wherein said parameters are used by a command step that is arranged to produce and print only a proof job or, to produce and print a proof job together with the print job (101) or, to produce a proof job and print the proof job during the printing of the corresponding print job (101) repeatedly at a predetermined time interval or after a predetermined number of the print job copies have been printed.

10. The reprographic device according to any of claims 6-9, wherein the reprographic device is a printer (201), a printer controller, a print server, or a pre-print workstation.

## Patentansprüche

1. Verfahren zur automatischen Erzeugung eines Proofauftrags von einem Druckauftrag (101), der auf einem Drucker (201) zu drucken ist, wobei der Druckauftrag (101) ein oder mehrere Dokumente (102) und null oder mehr Auftragsparameter (104) aufweist, wobei die Dokumente (102) ein oder mehrere graphische Elemente (103) aufweisen und wobei der Drucker (201) eine Druckerkonfiguration (202) hat, wobei die Druckerkonfiguration eine Druckereinstellung (203) und einen Druckerzustand (204) umfasst, welches Verfahren die folgenden Schritte aufweist:
- bestimmen (2), für ein graphisches Element (103) des einen oder der mehreren Dokumente (102), dass das Drucken des graphischen Elements (103) unter Berücksichtigung der Druckereinstellung (203) und/oder des Druckerzustands (204) voraussichtlich zu einem Druckqualitätsproblem führen wird, und, soweit vorhanden, eines oder mehrerer Auftragsparameter (104), die Charakterisierungsparameter (402) von Metadaten (401) sind, die dem graphischen Element (103) zugeordnet und dazu bestimmt sind, für das Drucken des graphischen Elements (103) verwendet zu werden,
- analysieren (2) wenigstens eines Teils der graphischen Elemente (103) eines eingegebenen Dokuments (102) des Druckauftrags (101),
- produzieren der zugeordneten Metadaten (401), die die Charakterisierungsparameter (402) enthalten, als Ausgabewert für einige der analysierten graphischen Elemente (103),
- auswählen (3), auf der Grundlage der zugeordneten Metadaten (401), die die Charakterisierungsparameter (402) enthalten, von graphischen Elementen (103) aus dem eingegebenen Dokument (102) in dem Druckauftrag (101) in der Nähe des bestimmten graphischen Elements (103)
- erzeugen (5) von abgeleiteten graphischen Elementen aus den ausgewählten graphischen Elementen und den zugeordneten Metadaten und unter Berücksichtigung der Druckparameter und der Druckerkonfiguration,
- zusammenstellen (4) eines Proofauftrags, der ein Proof-Dokument mit graphischen Proof-Elementen enthält und einen Proof für Druckparameter liefert, die aus den Druckauftragparametern (104) und den Druckreinstellungen (203) entnommen sind, und
drucken des zusammengesetzten Proofaufrags mit dem Drucker (201),
wobei die graphischen Proof-Elemente aus einem Satz der ausgewählten graphischen Elemente (103) stammen und/oder die abgeleiteten graphischen Elemente ein Attribut haben, das gleich einem Attribut des bestimmten graphischen Elements (103) ist, wobei die Attribute zu dem Auftreten des Druckqualitätsproblems beitragen, und wobei das abgeleitete graphische Element als eine visuelle Unterstützung visuell den ausgewählten graphischen Elementen zugeordnet ist, die zu drucken sind, und
wobei die Bestimmung (2), dass das Drucken des graphischen Elements (103) voraussichtlich zu einem Druckqualitätsproblem führen wird, die Bestimmung einschließt, dass das Drucken des graphischen Elements (103) voraussichtlich deshalb zu einem Druckqualitätsproblem führen wird, weil die Wiedergabe oder das Drucken des graphischen Elements (103) mit wenigstens einem anderen ausgewählten graphischen Element (103) interagiert.

2. Verfahren nach Anspruch 1, bei dem der Schritt (2) der Bestimmung das voraussichtliche Auftreten wenigstens eines der folgenden Druckqualitätsprobleme bestimmt:
- unbekanntes oder ungültiges Format des Druckauftrags oder unbekannter oder ungültiger Inhalt des Druckauftrags.,
- unbekanntes oder ungültiges Format oder unbekannter oder ungültiger Inhalt des Dokuments,
- unbekannte oder ungültige Druckparameter,
- eine Kombination aus einander gegenseitig ausschließenden Druckparametern (104), wenn sie auf dem Zieldrucker (201) verwendet werden,
- Druckparameter (104), die auf dem Zieldrucker (201) schwer zu drucken sind,
- graphische Textelemente, die nicht eingebettete Softfonds verwenden,
- graphische Textelemente, die Fonds verwenden, die auf dem Drucker (201) nicht verfügbar sind,
- graphische Textelemente, die zu klein sind für die Ziel-Druckauflösung,
- graphische Bildelemente, die nicht eingebettet sind oder zerstörte Link-Referenzen aufweisen,
- graphische Elemente, die zu nah an dem Seitenrandbereich des Zieldruckers 8201) liegen,
- den Rand überschreitende graphische Elemente,
- überdrucken von graphischen Elementen,
- graphische Elemente, die schwer zu druckende dünne Linien sind,
- graphische Elemente, die geringen Kontrast zum Hintergrund haben,
- überdrucken von graphischen Elementen, die Transparenzen aufweisen,
- fehlende Griffe für graphische Vektorelemente,
- graphische Vektorelemente mit Details, die beim Drucken mit der Druckauflösung verschmelzen,
- graphische Elemente, die Farbtöne als Grauwerte verwenden,
- benachbarte graphische Elemente mit niedrigem Kontrast,
- hochgesättigte Farbtöne, die nicht reproduziert werden können,
- Hotspot-Farben,
- Palettenfarben, graphische Elemente, die unterschiedliche Verarbeitungsoptionen erfordern, die miteinander kollidieren, wenn sie gemeinsam auf dieselben Medien gedruckt werden,
- graphische Elemente mit unterschiedlichen Auflösungen,
- graphische Elemente mit einer Auflösung, die nicht zu der Druckauflösung passt,
- graphische Elemente, die vordefinierte Farben haben, die intensive Farben sein sollen,
- graphische Elemente, die unterschiedliche Farbräume benutzen,
- graphische Elemente, die Farben haben, die außerhalb des Dynamikbereichs des Druckers (201) liegen,
- graphische Elemente, die Farben haben, die als schwer zu reproduzierende Farben definiert sind, wenn sie auf diesem Drucker gedruckt werden, wahlweise unter Berücksichtigung von Druckparametern und/oder geladenen Verbrauchsmaterialien, und
- die Verwendung von ähnlichen oder verschiedenen Halbtönen auf einer einzelnen Seite.

3. Verfahren nach Anspruch 1 oder 2, bei dem wenigstens einer der Schritte der Bestimmung (2), der Auswahl (3) und des Zusammenstellens (4) dazu eingerichtet sind, die produzierten Ausgabewerte so zu begrenzen oder zu reduzieren, dass die Größe des Proofauftrags derart ist, dass der beim Drucken entstehende Abfall und/oder die Druckzeit vermindert werden, wenn der Proofauftrag auf diesem Drucker (201) gedruckt wird, der die Druckerkonfiguration (202) und den Status hat und diese Proof-Druckparameter benutzt.

4. Computerprogrammprodukt, das, wenn es auf einem Prozessor ausgeführt wird, das Verfahren nach einem der Ansprüche 1 bis 3 ausführt.

5. Nichtflüchtiger Datenträger, auf dem das Computerprogrammprodukt nach Anspruch 4 gespeichert ist.

6. Reprographische Vorrichtung zum automatischen Erzeugen eines Proofauftrags von einem Druckauftrag (101), der auf einem Drucker (201) zu drucken ist, wobei der Druckauftrag (101) ein oder mehrere Dokumente (102) und null oder mehr Auftragsparameter (104) aufweist, wobei die Dokumente (102) ein oder mehrere graphische Elemente (103) umfassen und wobei der Drucker (201) eine Druckerkonfiguration (202) hat, die Druckerkonfiguration (202) eine Druckereinstellung (203) und einen Druckerstatus (204) aufweist, welche Vorrichtung aufweist:
- eine Druckproblem-Bestimmungseinrichtung zum Untersuchen (2) eines graphischen Elements (103) aus den ein oder mehreren Dokumenten (102) und zur Bestimmung, dass das Drucken des graphischen Elements (103) voraussichtlich zu einem Druckqualitätsproblem führen wird, wobei die Druckproblem-Bestimmungseinrichtung die Druckereinstellung (203) und/oder den Druckerstatus (204) berücksichtigt, und, soweit vorhanden, einen oder mehrere Auftragsparameter (104), die Charakterisierungsparameter (402) von Metadaten (401) sind, die dem graphischen Element (103) zugeordnet sind und dazu bestimmt sind, für das Drucken des graphischen Elements (103) verwendet zu werden, und zur Analyse wenigstens eines Teils des graphischen Elements (103) eines eingegebenen Dokuments (102) des Druckauftrags (101) und zur Produktion der zugeordneten Metadaten (401), die die Charakterisierungsparameter (402) enthalten, als Ausgabewerte für einige der analysierten graphischen Elemente (103), eine Element-Auswahleinrichtung zur Auswahl (3), auf der Basis der zugeordneten Metadaten, die die Charakterisierungsparameter (402) enthalten, von graphischen Elementen (103) aus dem eingegebenen Dokument (102) in dem Druckauftrag (101) in der Nähe des bestimmten graphischen Elements, eine Erzeugungseinrichtung zum Erzeugen (5) von ausgewählten graphischen Elementen und zugeordneten Metadaten und unter Berücksichtigung der Druckparameter und der Druckerkonfiguration abgeleiteter graphischer Elemente, eine Proofauftrag-Kompositionseinrichtung zum Zusammenstellen (4) eines Proofauftrags, der ein Proof-Dokument enthält, das graphische Proof-Elemente aufweist und Proof-Druckparameter, die den Auftragsparametern (104) und/oder Druckereinstellungen (203) entnommen sind, wobei die graphischen Proof-Elemente aus einem Satz der ausgewählten graphischen Elemente stammen, und/oder die abgeleiteten graphischen Elemente ein Attribut haben, das gleich einem Attribut des bestimmten graphischen Elements ist, wobei das Attribut zu dem Auftreten des Druckqualitätsproblems beiträgt, und wobei das abgeleitete graphische Element als eine visuelle Unterstützung visuell dem ausgewählten graphischen Element (103) zugeordnet ist, das gedruckt werden soll, und
wobei die Bestimmung, dass das Drucken des graphischen Elements (103) voraussichtlich zu einem Druckqualitätsproblem führen wird, die Bestimmung einschließt, dass das Drucken des graphischen Elements (103) voraussichtlich deshalb zu einem Druckqualitätsproblem führen wird, weil die Wiedergabe oder das Drucken des graphischen Elements (103) mit wenigstens einem anderen ausgewählten graphischen Element (103) interagiert.

7. Reprographische Vorrichtung nach Anspruch 6, die ein Drucker oder ein Druckersteuergerät ist, weiterhin aufweisend:
- eine Benutzer-Eingabeeinrichtung zum Empfang von Eingaben von einem Benutzer, und
- eine Benutzer-Ausgabeeinrichtung zur Ausgabe von Ausgabeobjekten an einen Benutzer, und
wobei die Benutzer-Eingabeeinrichtung dazu ausgebildet ist, ein Proof-Werkzeug anzuzeigen, um es Druckoperatoren zu ermöglichen, die Erzeugung eines Proofauftrags auszulösen, und wobei die Benutzer-Ausgabeeinrichtung dazu ausgebildet ist, in Kombination mit dem Proof-Werkzeug wenigstens einen Teil der Druckparameter (104) des Druckauftrags anzuzeigen, der aktuell ausgewählt ist.

8. Reprographische Vorrichtung nach Anspruch 7, dazu ausgebildet, für jeden an dem Drucker (201) eintreffenden Druckauftrag (101) auf der Grundlage der Druckerkonfiguration (202) automatisch einen Proofauftrag zu erstellen und zu drucken.

9. Reprographische Vorrichtung nach Anspruch 6 oder 7, dazu ausgebildet, einen oder mehrere Proof-Parameter oder -befehle zu verwenden, die in die Druckauftragparameter (104) eingebettet sind, und wobei diese Parameter von einem Befehlsschritt verwendet werden, der dazu eingerichtet ist, nur einen Proofauftrag zu erstellen und zu drucken oder einen Proofauftrag zusammen mit dem Druckauftrag (101) zu erstellen und zu drucken oder während des Druckens des entsprechenden Druckauftrags (101) wiederholt in einem vorbestimmten Zeitintervall, oder nachdem eine vorbestimmte Anzahl von Druckauftrag-Kopien gedruckt worden ist, einen Proofauftrag zu erstellen und den Proofauftrag zu drucken.

10. Reprographische Vorrichtung nach einem der Ansprüche 6 bis 9, bei der die reprographische Vorrichtung ein Drucker (201), ein Druckersteuergerät, ein Druckerserver oder ein Druckvorstufen-Arbeitsplatz ist.

## Revendications

1. Procédé de génération automatique d'un travail formant preuve à partir d'un travail d'impression (101) à imprimer sur une imprimante (201), le travail d'impression (101) comprenant un ou plusieurs documents (102) et zéro paramètre de travail ou plus (104), dans lequel les documents (102) comprennent un ou plusieurs éléments graphiques (103), et dans lequel l'imprimante (201) présente une configuration d'imprimante (202), la configuration d'imprimante (202) comprenant un réglage d'imprimante (203) et un état d'imprimante (204), le procédé comprenant les étapes consistant à :
- déterminer (2) pour un élément graphique (103) des un ou plusieurs documents (102) qu'imprimer l'élément graphique (103) impliquera probablement un problème de qualité d'impression tout en prenant en compte le réglage d'imprimante (203) et/ou l'état d'imprimante (204), et, le cas échéant, un ou plusieurs paramètres de travail (104) étant des paramètres de caractérisation (402) de métadonnées (401) associées à l'élément graphique (103) et destinées à être utilisées pour l'impression de l'élément graphique (103),
- analyser (2) au moins une partie des éléments graphiques (103) d'un document d'entrée (102) du travail d'impression (101),
- produire, en tant que sortie pour certains des éléments graphiques analysés (103), les métadonnées associées (401) comprenant les paramètres de caractérisation (402),
- sélectionner (3), sur la base des métadonnées associées (401) comprenant les paramètres de caractérisation (402), des éléments graphiques (103) depuis le document d'entrée (102) dans le travail d'impression (101) à proximité de l'élément graphique déterminé (103),
- générer (5), à partir des éléments graphiques sélectionnés et des métadonnées associées et en prenant en considération les paramètres d'impression et la configuration d'imprimante, des éléments graphiques dérivés,
- composer (4) un travail formant preuve comprenant un document de preuve comprenant des éléments graphiques de preuve, et des paramètres d'impression de preuve pris à partir des paramètres de travail d'impression (104) ou des réglages d'imprimante (203), et
- l'imprimante (201) imprimant le travail formant preuve composé.
dans lequel les éléments graphiques de preuve proviennent d'un ensemble des éléments graphiques sélectionnés (103), et/ou les éléments graphiques dérivés présentant un attribut qui est égal à un attribut de l'élément graphique déterminé (103), dans lequel l'attribut contribue à l'apparition du problème de qualité d'impression, et
dans lequel l'élément graphique dérivé est visuellement associé aux éléments graphiques sélectionnés (103) à imprimer en tant qu'aide visuelle, et
dans lequel l'étape consistant à déterminer (2) qu'imprimer l'élément graphique (103) impliquera probablement un problème de qualité d'impression comprend l'étape consistant à déterminer qu'imprimer l'élément graphique (103) impliquera probablement un problème de qualité d'impression en raison du rendu ou de l'impression de l'élément graphique (103) interagissant avec au moins un autre élément graphique sélectionné (103).

2. Procédé selon la revendication 1, dans lequel l'étape de détermination (2) détermine l'implication probable d'au moins un des problèmes de qualité d'impression suivants :
• format ou contenu de travail d'impression inconnu ou invalide,
• format ou contenu de document inconnu ou invalide,
• paramètres d'impression inconnus ou invalides,
• une combinaison de paramètres d'impression mutuellement exclusifs (104) lorsqu'ils sont utilisés sur l'imprimante cible (201),
• des paramètres d'impression (104) qui sont difficiles à imprimer sur l'imprimante cible (201),
• des éléments graphiques textuels utilisant des polices de caractères douces non intégrées,
• des éléments graphiques textuels utilisant des polices de caractères indisponibles sur l'imprimante (201),
• des éléments graphiques textuels qui sont trop petits pour la résolution d'impression cible,
• des éléments graphiques d'image qui ne sont pas intégrés ou présentant des références de lien brisées,
• des éléments graphiques proches de la zone d'encombrement de page de l'imprimante cible (201),
• des éléments graphiques d'encombrement,
• une surimpression d'éléments graphiques,
• des éléments graphiques qui sont des fines lignes difficiles à imprimer,
• des éléments graphiques présentant un faible contraste en arrière-plan,
• une surimpression d'éléments graphiques qui présentent des transparences,
• des pinceaux manquants pour des éléments graphiques vectoriels,
• des éléments graphiques vectoriels avec des détails qui fusionnent lorsqu'ils sont imprimés à la résolution d'impression,
• des éléments graphiques qui utilisent des tons de couleur pour des niveaux de gris,
• des éléments graphiques adjacents à faible contraste,
• des tons riches qui ne peuvent pas être reproduits,
• des couleurs hotspot,
• des couleurs de palette,
• des éléments graphiques nécessitant différentes options de traitement qui interfèrent les unes avec les autres lorsqu'ils sont imprimés ensemble sur le même support,
• des éléments graphiques avec différentes résolutions,
• des éléments graphiques avec une résolution ne correspondant pas à la résolution d'impression,
• des éléments graphiques présentant des couleurs prédéfinies considérées comme étant des couleurs intenses,
• des éléments graphiques utilisant différents espaces de couleur,
• des éléments graphiques présentant des couleurs qui sont hors de la gamme pour l'imprimante (201),
• des éléments graphiques présentant des couleurs qui sont définies comme difficiles à reproduire lorsqu'ils sont imprimés sur ladite imprimante prenant facultativement en compte des paramètres d'impression et/ou des consommables chargés, et
• l'utilisation de demi-tons similaires ou différents sur une seule page.

3. Procédé selon la revendication 1 ou 2, dans lequel au moins une desdites étapes consistant à déterminer (2), sélectionner (3) et composer (4) sont agencées pour limiter ou réduire les sorties produites de sorte que la taille du travail formant preuve soit telle que la perte d'impression et/ou la durée d'impression sont réduites lors de l'impression du travail formant preuve sur ladite imprimante (201) présentant ladite configuration d'imprimante (202) et le statut et utilisant lesdits paramètres d'impression de preuve.

4. Produit de programme informatique qui, lorsqu'il est exécuté sur un processeur, exécute un procédé selon l'une quelconque des revendications 1 à 3.

5. Support de données non transitoire ayant stocké sur celui-ci le produit de programme informatique selon la revendication 4.

6. Dispositif reprographique pour générer automatiquement un travail formant preuve à partir d'un travail d'impression (101) à imprimer sur une imprimante (201), le travail d'impression (101) comprenant un ou plusieurs documents (102) et zéro paramètre de travail ou plus (104), dans lequel les documents (102) comprennent un ou plusieurs éléments graphiques (103), et dans lequel l'imprimante (201) présente une configuration d'imprimante (202), la configuration d'imprimante (202) comprenant un réglage d'imprimante (203) et un état d'imprimante (204), le dispositif comprenant :
- un moyen de détermination de problème d'impression pour examiner (2) un élément graphique (103) depuis les un ou plusieurs documents (102) et déterminer qu'imprimer l'élément graphique (103) impliquera probablement un problème de qualité d'impression, dans lequel le moyen de détermination de problème d'impression prend en compte le réglage d'imprimante (203) et/ou l'état d'imprimante (204), et, le cas échéant, un ou plusieurs paramètres de travail (104), étant des paramètres de caractérisation (402) de métadonnées (401) associées à l'élément graphique (103) et destinées à être utilisées pour l'impression de l'élément graphique (103), et pour analyser au moins une partie des éléments graphiques (103) d'un document d'entrée (102) du travail d'impression (101), et pour produire, en tant que sortie pour certains des éléments graphiques analysés (103), les métadonnées associées (401) comprenant les paramètres de caractérisation (402), un moyen de sélection d'élément graphique pour sélectionner (3), sur la base des métadonnées associées comprenant les paramètres de caractérisation (402), des éléments graphiques (103) depuis le document d'entrée (102) dans le travail d'impression (101) à proximité de l'élément graphique déterminé, un moyen de génération pour générer (5), à partir des éléments graphiques sélectionnés et des métadonnées associées et en prenant en considération les paramètres d'impression et la configuration d'imprimante, des éléments graphiques dérivés, un moyen de composition de travail d'impression pour composer (4) un travail formant preuve comprenant un document de preuve comprenant des éléments graphiques de preuve, et des paramètres d'impression de preuve pris à partir des paramètres de travail (104) ou des réglages d'imprimante (203), dans lequel les éléments graphiques de preuve proviennent d'un ensemble des éléments graphiques sélectionnés, et/ou les éléments graphiques dérivés présentant un attribut qui est égal à un attribut de l'élément graphique déterminé, dans lequel l'attribut contribue à l'apparition du problème de qualité d'impression, et
dans lequel l'élément graphique dérivé est visuellement associé aux éléments graphiques sélectionnés (103) à imprimer en tant qu'aide visuelle, et
dans lequel l'étape consistant à déterminer qu'imprimer l'élément graphique (103) impliquera probablement un problème de qualité d'impression comprend l'étape consistant à déterminer qu'imprimer l'élément graphique (103) impliquera probablement un problème de qualité d'impression en raison du rendu ou de l'impression de l'élément graphique (103) interagissant avec au moins un autre élément graphique sélectionné (103).

7. Dispositif reprographique selon la revendication 6 qui est une imprimante (201) ou un dispositif de commande d'imprimante, comprenant en outre :
- un moyen d'entrée utilisateur pour recevoir une entrée d'un utilisateur, et
- un moyen de sortie utilisateur pour fournir une sortie à un utilisateur, et, dans lequel le moyen d'entrée utilisateur est agencé pour afficher un widget de preuve pour permettre à des opérateurs d'impression de déclencher la génération d'un travail d'impression et, dans lequel le moyen de sortie utilisateur est agencé pour montrer au moins une partie des paramètres d'impression (104) du travail d'impression (101) qui est actuellement sélectionné en combinaison avec le widget de preuve.

8. Dispositif reprographique selon la revendication 7 agencé pour produire et imprimer automatiquement un travail formant preuve pour chaque travail d'impression (101) reçu sur l'imprimante (201) sur la base de la configuration d'imprimante (202).

9. Dispositif reprographique selon la revendication 6 ou 7 agencé pour utiliser un(e) ou plusieurs paramètres ou commandes de preuve intégré(e)s dans les paramètres de travail d'impression (104) et, dans lequel lesdits paramètres sont utilisés par une étape de commande qui est agencée pour produire et imprimer uniquement un travail formant preuve ou, pour produire et imprimer un travail formant preuve avec le travail d'impression (101) ou, pour produire un travail formant preuve et imprimer le travail formant preuve durant l'impression du travail d'impression correspondant (101) de manière répétée à un intervalle de temps prédéterminé ou après qu'un nombre prédéterminé des copies de travail d'impression a été imprimé.

10. Dispositif reprographique selon l'une quelconque des revendications 6 à 9, dans lequel le dispositif reprographique est une imprimante (201), un dispositif de commande d'imprimante, un serveur d'impression, ou un poste de travail de pré-impression.
